# EUROPÄISCHE PATENTSCHRIFT

(11) **EP 2 669 202 B1**
(45) Veröffentlichungstag und Bekanntmachung des Hinweises auf die Patenterteilung: **14.01.2015**
(21) Anmeldenummer: 13002548.9
(22) Anmeldetag: 15.05.2013
(51) Int. Cl.: B65B 35/24, B65B 5/10, B65B 57/14

(54) **Verfahren für Pickerstraße und Verpackungsanlage**
Method for picker line and packaging plant
Procédé pour table de préhension et installation d'emballage

(30) Priorität: 31.05.2012 DE 102012010844
(43) Veröffentlichungstag der Anmeldung: 04.12.2013
(73) Patentinhaber: Multivac Sepp Haggenmüller GmbH & Co. KG, 87787 Wolfertschwenden (DE)
(72) Erfinder: Norbert, Wörz, 87746 Erkheim (DE)
(74) Vertreter: Grünecker, Kinkeldey, Stockmair & Schwanhäusser

(56) Entgegenhaltungen:
- EP-A1- 1 352 831
- EP-A1- 2 586 712
- EP-A2- 2 184 233

## Beschreibung

Die Erfindung bezieht sich auf ein Verfahren nach Anspruch 1 zum Betrieb einer Pickerstraße zum Einlegen von Produkten, die auf Zuführbändern im Gleichlauf an eine Verpackungsmaschine zugeführt werden und von dort von Pickern erfasst und in Packungsmulden eingelegt werden, sowie auf eine Verpackungsanlage mit den Merkmalen des Anspruchs 5.

Es sind aus der Praxis Pickerstraßen mit mehreren Pickern an Verpackungsmaschinen, beispielsweise an Tiefziehverpackungsmaschinen, bekannt, siehe zur Beispiel EP 2586712 oder EP 1352831. Dabei werden die einzulegenden Produkte auf einem Transportband parallel zur Einlegestrecke der Tiefziehverpackungsmaschine zugeführt, wobei die Transportrichtung der Produkte der Transportrichtung der Tiefziehverpackungsmaschine entspricht, d.h. die Produkte werden im Gleichlauf zugeführt. Bevor die Produkte in den Bereich der Picker gelangen, werden sie von einem Visionsystem optisch erfasst, um die Position und Ausrichtung eines jeden einzelnen Produkts zu erfassen und der Steuerung mitzuteilen. Über die Steuerung oder vom Visionsystem direkt erhalten die einzelnen Picker die Informationen über die Position der einzelnen Produkte auf dem Zuführband. Über eine vorgegebene Logik nehmen die Picker die Produkte vom Zuführband auf und legen sie in Packungsmulden in der Tiefziehverpackungsmaschine ein. Ziel dabei ist es, dass am Ende des Zuführbands bzw. nach dem letzten Picker alle Produkte aufgenommen und eingelegt worden sind, und dass alle Packungsmulden vor dem Verschließen mit einer Deckelfolie in einer der Einlegestrecke nachfolgenden Siegelstation gefüllt sind. Im Gleichlauf muss der letzte Picker diese Zielsetzung abschließend alleine erfüllen.

Dabei kann folgendes Problem auftreten: Es stehen dem letzten Picker nur wenige Produkte, die einen großen Abstand aufweisen können, auf dem Zuführband zur Verfügung, und es können deutlich mehr noch zu beladene Mulden in seinem Einlegebereich vorhanden sein. In diesem Fall können nicht alle Mulden bzw. Packungen mit Produkten gefüllt werden. Um diesem Problem in der Praxis aus dem Wege zu gehen, werden üblicherweise mehr Produkte als nötig auf dem Zuführband zugeführt, damit der letzte Picker immer ausreichend Produkte zur Verfügung hat, um die Packungsmulden zu 100% füllen zu können. Überzählige Produkte werden am Ende des Zuführbands ausgeschleust und händisch oder über ein zusätzliches Transportband in den Bereich vor der Pickerstraße dem Zuführband wieder zugeführt.

Aufgabe der vorliegenden Erfindung ist es, ein Verfahren für eine Pickerstraße zur Verfügung zu stellen, um die Anzahl von überschüssigen Produkten, die nicht vom letzten Picker einer Pickerstraße aufgenommen werden können, zu minimieren.

Diese Aufgabe wird gelöst durch ein Verfahren für eine Pickerstraße mit den Merkmalen des Anspruchs 1 und durch eine Verpackungsanlage mit den Merkmalen des Anspruchs 5. Vorteilhafte Weiterbildungen der Erfindung sind in den Unteransprüchen angegeben.

Das erfindungsgemäße Verfahren für eine Pickerstraße zum Einlegen von Produkten in eine Verpackungsmaschine umfasst wenigstens zwei Picker, ein erstes Zuführband und ein erstes Visionsystem, wobei der erste Picker nach dem ersten Visionsystem angeordnet und dem ersten Zuführband zugeordnet ist, wobei ein zweites Visionsystem und ein zweites Zuführband nachfolgend dem ersten Zuführband vorgesehen sind und der letzte Picker dem zweiten Zuführband zugeordnet und nach dem zweiten Visionsystem angeordnet ist. Dabei ist die Geschwindigkeit des zweiten Zuführbands gegenüber der Geschwindigkeit des ersten Zuführbands reduziert, um die Abstände zwischen den von dem ersten Picker nicht erfassten Produkten zu verringern und die Position der Produkte mittels des zweiten Visionsystems an den letzten Picker zu übermitteln. Die zwei unabhängig ansteuerbaren und aufeinander folgenden Zuführbänder führen zu einer Pufferung der für den letzten Picker vorgesehenen Produkte auf dem zweiten Zuführband, und die geringere Geschwindigkeit des zweiten Zuführbands gegenüber der Geschwindigkeit des ersten Zuführbands führt dazu, dass die Produkte ausreichend langsam im Bereich des letzten Pickers transportiert werden. So kann dieser letzte Picker alle Produkte erfassen und in die noch freien Verpackungsmulden einlegen, und somit kann die insgesamt zuzuführende Menge an Produkten der Leistung der Verpackungsmaschine und der Picker entsprechen. Die Rückführung von nicht erfassten Produkten vor die Zuführbänder kann entfallen.

Vorzugsweise erfassen wenigstens zwei erste Picker Produkte von dem ersten Zuführband, falls die Menge der einzulegenden Produkte in einer vorgegebenen Zeit dies erfordert.

In einer vorteilhaften Variante beträgt die Reduzierung der Geschwindigkeit mehr als 25%, vorzugsweise mehr als 50%.

Bevorzugt erfasst das zweite Visionsystem auch die Ausrichtung der Produkte und leitet diese Information an den letzten Picker weiter, um auch Produkte erfassen zu können, die in einem entsprechenden Winkel eingelegt werden sollen oder gebogene Produkte, wie beispielsweise Würste, sicher erfassen zu können.

Eine erfindungsgemäße Verpackungsanlage umfasst eine Verpackungsmaschine und eine entlang der Verpackungsmaschine angeordnete Pickerstraße, die wenigstens zwei Picker aufweist, sowie ein erstes Visionsystem für ein erstes Zuführband, und zeichnet sich dadurch aus, dass ein zweites Zuführband entlang der Verpackungsmaschine in Transportrichtung vorgesehen ist und an dem zweiten Zuführband ein zweites Visionsystem angeordnet ist, wobei die Geschwindigkeit des zweiten Zuführbands gegenüber der Geschwindigkeit des zweiten Zuführbands reduzierbar ist, um die Abstände zwischen den von dem ersten Picker nichterfassten Produkten verringern und die Position der Produkte mittels des zweiten Visionsystems an den letzten Picker übermitteln zu können.

Dabei sind die Pickerstraßen und die Verpackungsmaschine vorzugsweise im Gleichlauf angeordnet. So kann die Produktionsrichtung beibehalten werden.

Bevorzugt weist die Verpackungsmaschine mehrere Spuren mit Packungsmulden auf, um eine hohe Maschinenleistung zu erzielen.

Vorzugsweise sind das erste und zweite Zuführband entlang der Einlegestrecke der Verpackungsmaschine angeordnet.

Das erste und zweite Zuführband weisen vorzugsweise jeweils einen eigenen Antrieb auf, um mit voneinander verschiedenen Geschwindigkeiten betrieben werden zu können.

Vorzugsweise sind die Picker Delta-Roboter, um die Produkte von verschiedenen Positionen von dem Zuführband erfassen zu können und flexibel in leere Packungsmulden einlegen zu können.

Bevorzugt ist das zweite Visionsystem dazu konfiguriert, auch die Ausrichtung der Produkte erfassen und diese Information an den letzten Picker weiterzuleiten zu können, da sich die Position und/oder Ausrichtung der Produkte gegenüber der Erfassung vom ersten Visionsystem nach der Übergabe auf das zweite Zuführband verändert haben könnte.

Im Folgenden wird ein vorteilhaftes Ausführungsbeispiel der Erfindung anhand einer Zeichnung näher erläutert. Im Einzelnen zeigen:
- Fig. 1: eine Verpackungsanlage mit einer Pickerstraße in einer schematischen Draufsicht nach dem Stand der Technik,
- Fig. 2: eine Verpackungsanlage mit einer erfindungsgemäßen Pickerstraße, und
- Fig. 3: eine vorteilhafte Variante einer Verpackungsanlage mit zwei erfindungsgemäßen Pickerstraßen.

Gleiche Komponenten sind in den Figuren durchgängig mit gleichen Bezugszeichen versehen.

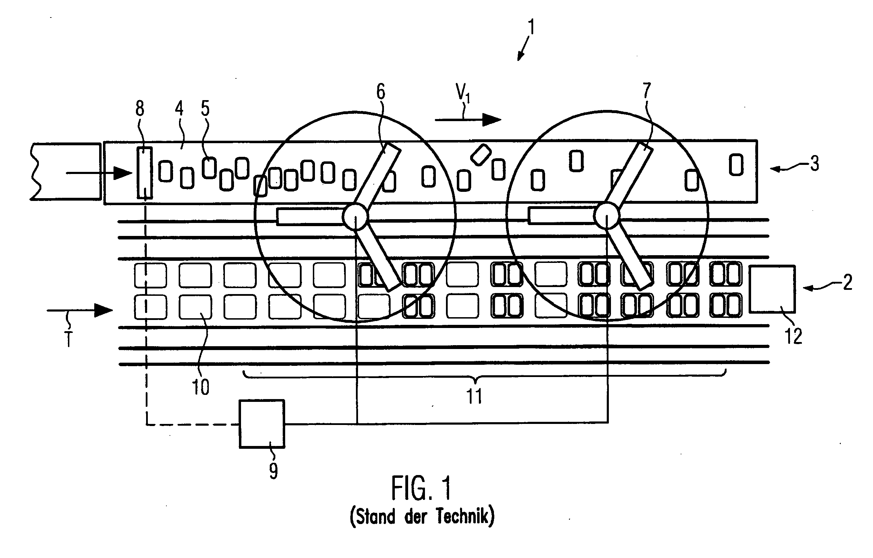

Fig. 1 zeigt eine Verpackungsanlage 1 nach dem Stand der Technik. Eine Verpackungsmaschine 2 in Form einer Tiefziehverpackungsmaschine und eine Pickerstraße 3 sind im Gleichlauf in einer Transportrichtung T parallel zueinander angeordnet. Über ein Zuführband 4 werden die Produkte 5 einem ersten Picker 6 und einem zweiten Picker 7 zugeführt. Ein Visionsystem 8 ermittelt am Beginn des Zuführbands 4 die Position und Ausrichtung der Produkte 5 und übermittelt diese Information an eine Pickersteuerung 9 oder an die Picker 6, 7 direkt. Die Verpackungsmaschine 2 stellt für die einzulegenden Produkte 5 tiefgezogene Packungsmulden 10 bereit, damit diese im Einlegebereich 11 von den Pickern 6, 7 mit Produkten 5 gefüllt werden. Anschließend werden die Verpackungsmulden 10 zusammen mit einer nicht dargestellten Deckelfolie in einer Siegelstation 12 zu einer luftdichten Verpackung verschlossen.

Das Verfahren wird wie folgt beschrieben. Das Zuführband läuft mit einer konstanten Geschwindigkeit v1 und führt ausreichend Produkte 5 den Pickern 6, 7 zu, damit die Picker 6, 7 die Produkte 5 in leere Packungsmulden 10, die in einer vorgegebenen Zeit gefüllt werden müssen, einlegen. Dabei nimmt der erste Picker 6 die Hälfte der einzulegenden Produkte 5 vom Zuführband 4 und legt diese in die Packungsmulden 10 ein. Somit befinden sich im Bereich des zweiten Pickers 7 auf dem Zuführband 4 Produkte 5 mit vergrößertem Abstand bzw. unterschiedlich großen Lücken zueinander, so dass die Leistung des zweiten Pickers 7 oftmals nicht ausreicht, um alle noch nicht gefüllten Packungsmulden 10 vollständig zu füllen. Um diesem Problem entgegenzuwirken, werden mehr Produkte 5 als benötigt zugeführt, um auch dem zweiten Picker 7 ausreichend Produkte 5 in seinem Erfassungsbereich zur Verfügung zu stellen. Dies führt unweigerlich dazu, dass einige nicht erfasste Produkte 5 am Ende des Zuführbands 4 gesammelt und vor dem Zuführband 4 wieder dem System zugeführt werden müssen. Ein weiteres Problem kann auftreten, wenn der erste Picker 6 beim Erfassen eines Produkts ein benachbartes Produkt derart berührt, dass seine Position oder die Ausrichtung verändert wird und es in Folge vom zweiten Picker 7 nicht mehr erfasst werden kann.

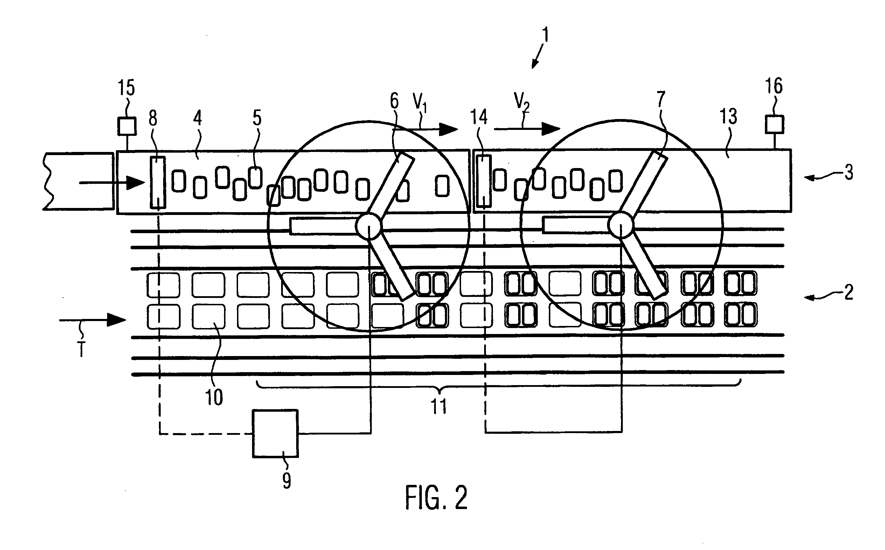

In Fig. 2 ist eine erfindungsgemäße Pickerstraße 3 mit einem ersten Picker 6 und einem zweiten Picker 7, sowie einem ersten Zuführband 4 mit einem ersten Visionsystem 8 für den ersten Picker 6 sowie einem zweiten Zuführband 13 mit einem zweiten Visionsystem 14, das in Transportrichtung T am Beginn des zweiten Zuführbands 13 angeordnet ist, für den zweiten Picker 7 dargestellt. Das erste Zuführband 4 weist einen Antrieb 15 auf und transportiert die Produkte mit einer ersten Geschwindigkeit v1, wobei vorzugsweise die Geschwindigkeit v1 konstant ist, bzw. proportional zur Leistung der Verpackungsmaschine 2 oder entsprechend der zuzuführenden Menge von Produkten 5 einstellbar ist. Das zweite Zuführband 13 weist einen zweiten Antrieb 16 auf, um dieses Zuführband 13 mit einer gegenüber der Geschwindigkeit v1 geringeren Geschwindigkeit v2 konstant bewegen zu können oder in Abhängigkeit von den mittels des Visionsystems 14 erfassten Produkte 5 die Geschwindigkeit v2 ändern zu können, um die Abstände zwischen den Produkten so anzupassen, dass die Abstände so gering sind, dass das zweite Zuführband 13 entsprechend langsam bewegt werden kann, damit der zweite Picker 7 alle Produkte 5 erfassen und einlegen kann. Das zweite Zuführband 13 kann somit die Produkte 5, die nicht durch den ersten Picker 6 erfasst wurden, puffern und die Lücken zwischen den Produkten nach dem ersten Picker 6 verringern und somit mit einer geringeren Geschwindigkeit v2 die Produkte 5 im Bereich des zweiten Pickers 7 zuführen.

So kann bei einer gleichbleibenden Anzahl von Pickern 6, 7 und einer gleichbleibenden Länge der Einlegestrecke 11 sichergestellt werden, dass alle Packungsmulden 10 gefüllt und alle Produkte 5 vom zweiten Picker 7 erfasst werden können.

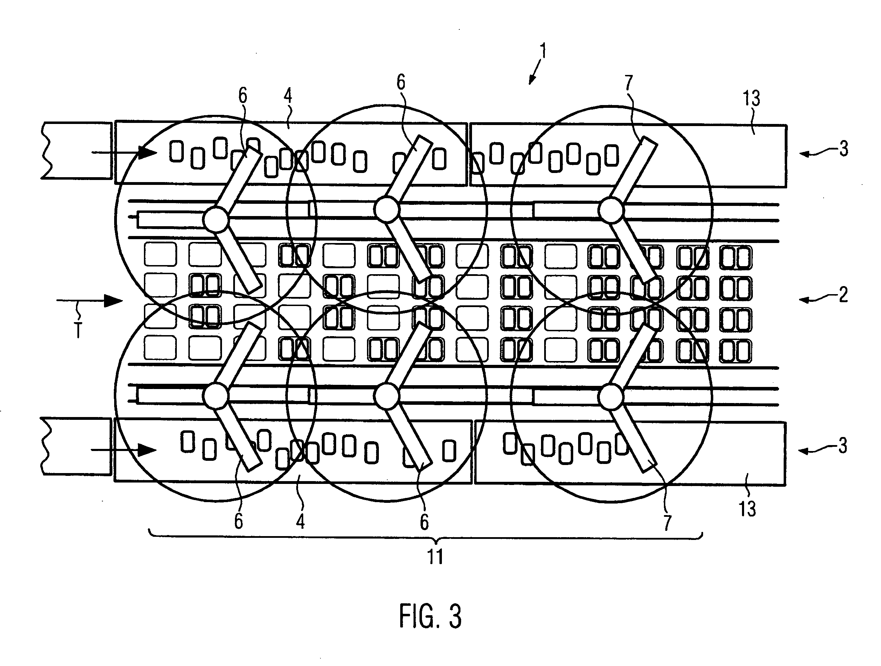

Fig. 3 zeigt eine vorteilhafte Variante einer Verpackungsanlage 1 mit zwei Pickerstraßen 3 an einer vierspurigen Verpackungsmaschine 2, bei denen die Zuführbänder 4, 13 und die Picker 6, 7 beidseitig der Verpackungsmaschine 2 entlang der Einlegestrecke 11 und im Gleichlauf angeordnet sind und zwei Picker 6 je erstem Zuführband 4 vorgesehen sind.

Ebenso sind auch mehr als zwei Picker 6 für das erste Zuführband 4 denkbar oder mehr als zwei Zuführbänder 13 je Pickerstraße 3 denkbar, wobei die Geschwindigkeit des letzten Zuführbands kleiner ist als die Geschwindigkeit des vorletzten Zuführbands.

## Patentansprüche

1. Verfahren zum Betrieb einer Pickerstraße (3) zum Einlegen von Produkten (5) in eine Verpackungsmaschine (2), umfassend wenigstens zwei Picker (6, 7), ein erstes Zuführband (4) und ein erstes Visionsystem (8), wobei der erste Picker (6) nach dem ersten Visionsystem (8) angeordnet und dem ersten Zuführband (4) zugeordnet ist, wobei ein zweites Visionsystem (14) und ein zweites Zuführband (13) nachfolgend dem ersten Zuführband (4) vorgesehen sind und der letzte Picker (7) dem zweiten Zuführband (13) zugeordnet und nach dem zweiten Visionsystem (14) angeordnet ist, wobei die Geschwindigkeit (v2) des zweiten Zuführbands (13) gegenüber der Geschwindigkeit (v1) des ersten Zuführbands (4) reduziert ist, um die Abstände zwischen den von dem ersten Picker (6) nicht erfassten Produkten (5) zu verringern und die Position der Produkte (5) mittels des zweiten Visionsystems (14) an den letzten Picker (7) zu übermitteln, **dadurch gekennzeichnet**, die Picker (6, 7) Delta-Roboter sind.

2. Verfahren nach Anspruch 1, **dadurch gekennzeichnet, dass** wenigstens zwei erste Picker (6) Produkte (5) von dem ersten Zuführband (4) erfassen.

3. Verfahren nach einem der vorangehenden Ansprüche, **dadurch gekennzeichnet, dass** die Reduzierung der Geschwindigkeit von der (v1) des ersten Zuführbandes auf die (v2) des zweiten Zuführbandes (13) mehr als 25%, vorzugsweise mehr als 50% beträgt.

4. Verfahren nach einem der vorangehenden Ansprüche, **dadurch gekennzeichnet, dass** das zweite Visionsystem (14) auch die Ausrichtung der Produkte (5) erfasst und diese Information an den letzten Picker (7) weiterleitet.

5. Verpackungsanlage (1), umfassend eine Verpackungsmaschine (2) und eine entlang der Verpackungsmaschine (2) angeordnete Pickerstraße (3), die wenigstens zwei Picker (6, 7) aufweist, sowie ein erstes Visionsystem (8) für ein erstes Zuführband (4), wobei ein zweites Zuführband (13) dem ersten Zuführband (4) nachfolgend vorgesehen ist und an dem zweiten Zuführband (13) ein zweites Visionsystem (14) angeordnet ist, wobei die Geschwindigkeit (v2) des zweiten Zuführbands (13) gegenüber der Geschwindigkeit (v1) des ersten Zuführbands (4) reduzierbar ist, um die Abstände zwischen den von dem ersten Picker (6) nicht erfassten Produkten (5) verringern und die Position der Produkte (5) mittels des zweiten Visionsystems (14) an den letzten Picker (7) übermitteln zu können, **dadurch gekennzeichnet** die Picker (6, 7) Delta-Roboter sind.

6. Verpackungsanlage (1) nach Anspruch 5, **dadurch gekennzeichnet, dass** wenigstens zwei Picker (6) dem ersten Zuführband (4) zugeordnet sind.

7. Verpackungsanlage (1) nach Anspruch 5 oder 6, **dadurch gekennzeichnet, dass** die Pickerstraßen (3) und die Verpackungsmaschine (2) im Gleichlauf angeordnet sind.

8. Verpackungsanlage (1) nach einem der Ansprüche 5 bis 7, **dadurch gekennzeichnet, dass** die Verpackungsmaschine (2) mehrere Spuren mit Packungsmulden (12) aufweist.

9. Verpackungsanlage (1) nach einem der Ansprüche 5 bis 8, **dadurch gekennzeichnet, dass** das erste (4) und das zweite Zuführband (13) entlang einer Einlegestrecke (11) der Verpackungsmaschine (2) angeordnet sind.

10. Verpackungsanlage (1) nach einem der Ansprüche 5 bis 9, **dadurch gekennzeichnet, dass** das erste (4) und das zweite Zuführband (13) jeweils einen eigenen Antrieb (15, 16) aufweisen.

11. Verpackungsanlage (1) nach einem der Ansprüche 5 bis 10, **dadurch gekennzeichnet, dass** das zweite Visionsystem (14) dazu konfiguriert ist, auch die Ausrichtung der Produkte (5) erfassen und diese Information an den letzten Picker (7) weiterzuleiten zu können.

## Claims

1. A method of operating a picker line (3) for feeding products (5) into a packaging machine (2), comprising at least two pickers (6, 7), a first feed belt (4) and a first vision system (8), the first picker (6) being arranged downstream of the first vision system (8) and being associated with the first feed belt (4), wherein a second vision system (14) and a second feed belt (13) are provided downstream of the first feed belt (4) and the last picker (7) is associated with the second feed belt (13) and arranged downstream of the second vision system (14), the speed (v2) of the second feed belt (13) being reduced in comparison with the speed (v1) of the first feed belt (4) so as to reduce the distances between the products (5) that have not been gripped by the first picker (6) and so as to transmit the positions of the products (5) by means of the second vision system (14) to the last picker (7), **characterized in that** the pickers (6,7) are delta robots.

2. A method according to claim 1, **characterized in that** at least two first pickers (6) grip products (5) from the first feed belt (4).

3. A method according to one of the preceding claims, **characterized in that** the reduction of the speed from (v1) of the first feed belt to (v2) of the second feed belt (13) amounts to more than 25%, preferably more than 50%.

4. A method according to one of the preceding claims, **characterized in that** the second vision system (14) detects also the orientation of the products (5) and transmits this information to the last picker (7).

5. A packaging plant (1), comprising a packaging machine (2) and a picker line (3) arranged along the packaging machine (2) and including at least two pickers (6, 7), as well as a first vision system (8) for a first feed belt (4), wherein a second feed belt (13) is provided downstream of said first feed belt (4), and that a second vision system (14) is arranged at the second feed belt (13), the speed (v2) of the second feed belt (13) being adapted to be reduced relative to the speed (v1) of the first feed belt (4) so that the distances between the products (5) which have not been gripped by the first picker (6) can be reduced and the positions of the products (5) can be transmitted to the last picker (7) by means of the second vision system (14), **characterized in that** the pickers (6, 7) are delta robots.

6. A packaging plant (1) according to claim 5, **characterized in that** at least two pickers (6) are associated with the first feed belt (4).

7. A packaging plant (1) according to claim 5 or 6, **characterized in that** the picker lines (3) and the packaging machine (2) are arranged such that they operate in the same direction.

8. A packaging plant (1) according to one of the claims 5 to 7, **characterized in that** the packaging machine (2) comprises a plurality of tracks with packaging troughs (12).

9. A packaging plant (1) according to one of the claims 5 to 8, **characterized in that** the first (4) and the second feed belt (13) are arranged along an infeed line (11) of the packaging machine (2).

10. A packaging plant (1) according to one of the claims 5 to 9, **characterized in that** the first (4) and the second feed belt (13) each have a drive unit (15, 16) of their own.

11. A packaging plant (1) according to one of the claims 5 to 10, **characterized in that** the second vision system (14) is configured such that it is able to detect also the orientation of the products (5) and to transmit this information to the last picker (7).

## Revendications

1. Procédé pour faire fonctionner une voie de prélèvement (3) destinée à déposer ou charger des produits (5) dans une machine d'emballage (2) et comprenant au moins deux organes de prélèvement (6, 7), une première bande d'approvisionnement (4) et un premier système de vision (8), le premier organe de prélèvement (6) étant agencé après le premier système de vision (8) et étant associé à la première bande d'approvisionnement (4), procédé d'après lequel il est prévu un deuxième système de vision (14) et une deuxième bande d'approvisionnement (13) à la suite de la première bande d'approvisionnement (4), et le dernier organe de prélèvement (7) est associé à la deuxième bande d'approvisionnement (13) et est agencé après le deuxième système de vision (14), la vitesse (v2) de la deuxième bande d'approvisionnement (13) étant réduite par rapport la vitesse (v1) de la première bande d'approvisionnement (4), pour diminuer les espacements entre les produits (5) non saisis par le premier organe de prélèvement (6), et transmettre la position des produits (5) au dernier organe de prélèvement (7) au moyen du deuxième système de vision (14),
**caractérisé en ce que** les organes de prélèvement (6, 7) sont des robots Delta.

2. Procédé selon la revendication 1, **caractérisé en ce qu'**au moins deux premiers organes de prélèvement (6) saisissent des produits (5) de la première bande d'approvisionnement (4).

3. Procédé selon l'une des revendications précédentes, **caractérisé en ce que** la réduction de la vitesse de celle (v1) de la première bande d'approvisionnement à celle (v2) de la deuxième bande d'approvisionnement (13), est d'une valeur de plus de 25%, de préférence de plus de 50%.

4. Procédé selon l'une des revendications précédentes, **caractérisé en ce que** le deuxième système de vision (14) relève également l'orientation des produits (5) et transmet cette information au dernier organe de prélèvement (7).

5. Installation d'emballage (1) comprenant une machine d'emballage (2) et une voie de prélèvement (3) agencée le long de la machine d'emballage (2) et comportant au moins deux organes de prélèvement (6, 7), ainsi qu'un premier système de vision (8) pour une première bande d'approvisionnement (4), installation dans laquelle il est prévu une deuxième bande d'approvisionnement (13) à la suite de la première bande d'approvisionnement (4), et un deuxième système de vision (14) est agencé au niveau de la deuxième bande d'approvisionnement (13), la vitesse (v2) de la deuxième bande d'approvisionnement (13) pouvant être réduite par rapport la vitesse (v1) de la première bande d'approvisionnement (4), pour pouvoir diminuer les espacements entre les produits (5) non saisis par le premier organe de prélèvement (6), et pouvoir transmettre la position des produits (5) au dernier organe de prélèvement (7) au moyen du deuxième système de vision (14),
**caractérisée en ce que** les organes de prélèvement (6, 7) sont des robots Delta.

6. Installation d'emballage (1) selon la revendication 5, **caractérisée en ce qu'**au moins deux organes de prélèvement (6) sont associés à la première bande d'approvisionnement (4).

7. Installation d'emballage (1) selon la revendication 5 ou la revendication 6, **caractérisée en ce que** les voies de prélèvement (3) et la machine d'emballage (2) sont agencées de manière à présenter des flux de fonctionnement de même sens.

8. Installation d'emballage (1) selon l'une des revendications 5 à 7, **caractérisée en ce que** la machine d'emballage (2) présente plusieurs pistes avec des cavités d'emballage (12).

9. Installation d'emballage (1) selon l'une des revendications 5 à 8, **caractérisée en ce que** la première (4) et la deuxième bande d'approvisionnement (13) sont agencées le long d'un parcours de dépose ou de chargement (11) de la machine d'emballage (2).

10. Installation d'emballage (1) selon l'une des revendications 5 à 9, **caractérisée en ce que** la première (4) et la deuxième bande d'approvisionnement (13) comportent chacune un entraînement (15, 16) qui leur est propre.

11. Installation d'emballage (1) selon l'une des revendications 5 à 10, **caractérisée en ce que** le deuxième système de vision (14) est configuré pour également pouvoir relever l'orientation des produits (5), et pouvoir transmettre cette information au dernier organe de prélèvement (7).
